(19) Europäisches Patentamt
European Patent Office
Office européen des brevets

(11) **EP 3 481 675 B1**

(12) **EUROPÄISCHE PATENTSCHRIFT**

(45) Veröffentlichungstag und Bekanntmachung des Hinweises auf die Patenterteilung:
**03.08.2022 Patentblatt 2022/31**

(21) Anmeldenummer: **17733967.8**

(22) Anmeldetag: **28.06.2017**

(51) Internationale Patentklassifikation (IPC):
***B60L 50/50*** *(2019.01)*

(52) Gemeinsame Patentklassifikation (CPC):
**B60R 16/033; B60L 15/2045; B60L 50/60; B60L 50/66; B60L 58/19; B60L 58/20; B60L 58/21; H01M 10/441; H02J 7/0024;** B60R 16/03; H02J 2310/46; Y02E 60/10; Y02T 10/64; Y02T 10/70; Y02T 10/7072; (Forts.)

(86) Internationale Anmeldenummer:
**PCT/EP2017/000765**

(87) Internationale Veröffentlichungsnummer:
**WO 2018/006996 (11.01.2018 Gazette 2018/02)**

(54) **BATTERIEANORDNUNG FÜR EIN KRAFTFAHRZEUG**

BATTERY ARRANGEMENT FOR A MOTOR VEHICLE

SYSTÈME DE BATTERIE POUR VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2016 DE 102016008263**

(43) Veröffentlichungstag der Anmeldung:
**15.05.2019 Patentblatt 2019/20**

(73) Patentinhaber: **Daimler AG**
**70372 Stuttgart (DE)**

(72) Erfinder:
• **DOERSAM, Thomas**
**70499 Stuttgart (DE)**
• **EICHINGER, Andreas**
**72119 Ammerbuch (DE)**
• **FALSETT, Rainer**
**64832 Babenhausen (DE)**

• **HACHTEL, Heiko**
**71701 Schwieberdingen (DE)**
• **HERB, Frieder**
**73230 Kirchheim (DE)**
• **LEHMANN, Oliver**
**70182 Stuttgart (DE)**
• **OHMS, Christian**
**71139 Ehningen (DE)**

(74) Vertreter: **JENSEN & SON**
**366-368 Old Street**
**London EC1V 9LT (GB)**

(56) Entgegenhaltungen:
**EP-A1- 2 897 247          DE-A1-102015 006 208**
**JP-A- 2010 178 421          JP-A- 2012 070 492**
**US-A1- 2012 256 568**

(52) Gemeinsame Patentklassifikation (CPC): (Forts.)
Y02T 10/72; Y02T 90/14

**Beschreibung**

Die Erfindung betrifft eine Batterieanordnung für ein Kraftfahrzeug, insbesondere für einen Personenkraftwagen, gemäß dem Oberbegriff von Patentanspruch 1.

Das Interesse richtet sich vorliegend insbesondere auf Batterieanordnungen, die beispielsweise in Elektrofahrzeugen oder in Hybridfahrzeugen verwendet werden. Diese Batterieanordnungen umfassen eine Mehrzahl an elektrischen Energiespeichern, welche zusammengefasst eine sogenannte Hochvolt-Batterie ergeben können. Die Hochvolt-Batterien weisen üblicherweise einen Ladeanschluss, mittels welchem die Hochvolt-Batterien geladen werden können, auf. Des Weiteren weisen die Hochvolt-Batterien üblicherweise einen Versorgungsanschluss auf, an welchem insbesondere die elektrischen Verbraucher, insbesondere des elektrischen Kraftfahrzeuges (beispielsweise Elektromotor) angeschlossen werden können.

Die elektrischen Energiespeicher beziehungsweise die Hochvolt-Batterien einer solchen Batterieanordnung werden meistens für feste Spannungslagen ausgelegt. In Hybridfahrzeugen befindet sich beispielsweise eine solche Spannungslage bei etwa 150 Volt. Für elektrische Energiespeicher, die in Elektrofahrzeugen oder in einem Plug-in-Hybrid verwendet werden, kann eine solche Spannung beispielsweise bei etwa 400 Volt liegen. Bei elektrisch getriebenen Bussen oder Lastkraftwagen liegt eine solche Spannung üblicherweise in einem Bereich von 800 Volt. Die heutzutage bekannten elektrischen Energiespeicher beziehungsweise Hochvolt-Batterien sind heutzutage nicht für alle Spannungslagen ausgelegt und können daher nicht in den unterschiedlichen Fahrzeugen eingesetzt werden.

EP2897247 offenbart eine Speicherbatterie-Verwaltungsvorrichtung, die eine Gruppe von in Reihe geschalteten Speicherbatterien effizient laden kann.

Aus der DE 10 2015 006 208 A1 ist bereits eine Batterieanordnung für ein Kraftfahrzeug mit einer elektrischen Trenneinrichtung sowie ein Verfahren zum Betreiben einer solchen Batterieanordnung bekannt. Die Batterieanordnung für ein Kraftfahrzeug weist hierfür einen ersten elektrischen Energiespeicher und einen zweiten elektrischen Energiespeicher auf. Des Weiteren umfasst die Batterieanordnung einen Ladeanschluss und einen Versorgungsanschluss sowie eine elektrische Trenneinrichtung. Die Trenneinrichtung ist dazu ausgelegt, den ersten und den zweiten elektrische Energiespeicher mit dem Ladeanschluss und/oder dem Versorgungsanschluss elektrisch zu verbinden. Weiterhin ist die elektrische Trenneinrichtung dazu ausgelegt, zum Laden des ersten und des zweiten elektrischen Energiespeichers mittels einer Ladestation über den Ladeanschluss den ersten und den zweiten elektrischen Energiespeicher in einer Ladekonfiguration elektrisch zu verbinden und zum Versorgen eines elektrischen Verbrauchers des Kraftfahrzeugs mittels des ersten und des zweiten elektrischen Energiespeichers über den Versorgungsanschluss den ersten und den zweiten elektrischen Energiespeicher in einer Betriebskonfiguration elektrisch zu verbinden. Bei der in der Druckschrift vorgestellten Erfindung handelt es sich allerdings lediglich um eine theoretische Erfindung, da beispielsweise eine technisch umsetzbare Lösung aufgrund von fehlenden Hochvoltwechselschaltern nach heutigem Stand der Technik nicht durchführbar ist.

Aufgabe der vorliegenden Erfindung ist es, eine Batterieanordnung der eingangs genannten Art derart weiterzuentwickeln, dass unter den Vorgaben der Hochvolt-Sicherheit und unter Berücksichtigung der Realisierbarkeit der Bauteile eine solche Batterieanordnung ermöglicht werden kann.

Diese Aufgabe wird durch eine Batterieanordnung mit den Merkmalen des Patentanspruchs 1. Vorteilhafte Ausgestaltungen mit zweckmäßigen Weiterbildungen der Erfindung sind in den übrigen Ansprüchen angegeben.

Um eine Batterieanordnung für ein Kraftfahrzeug der im Oberbegriff des Patentanspruchs 1 angegebenen Art derart weiterzuentwickeln, dass die Batterieanordnung den Vorgaben der Hochvolt-Sicherheit unter Berücksichtigung der Realisierbarkeit der Bauteile ermöglicht, ist es erfindungsgemäß vorgesehen, dass die Batterieanordnung einen zweiten Schalter aufweist, welcher einen negativen Pol des ersten elektrischen Energiespeichers mit dem negativen Pol des Versorgungsanschlusses verbindet. Des Weiteren ist es erfindungsgemäß, dass die Batterieanordnung einen sechsten Schalter aufweist, welcher den negativen Pol des ersten elektrischen Energiespeichers mit dem negativen Pol des Ladeanschlusses verbindet. Die Batterieanordnung weist weiterhin einen siebten Schalter auf, welcher den positiven Pol des zweiten elektrischen Energiespeichers mit dem positiven Pol des Ladeanschlusses verbindet. Mittels dieser Ausführungsform kann eine Vielzahl von möglichen Betriebszuständen ermöglicht werden. Des Weiteren kann somit die Anforderung der Hochvolt-Sicherheit entsprochen werden, da eine Potentialtrennung den Spannungsebenen realisiert werden kann. Die Schalter können beispielsweise als Hochvolt-Schütze ausgebildet sein, wobei sich diese in das Verschaltungskonzept integrieren lassen können und somit die Anzahl der Bauteile im Hochvolt-Antriebssystem auf ein Minimum reduziert werden können. Bei dieser erfindungsgemäßen Ausführungsform ist somit sowohl die Hochvolt-Sicherheit gegeben als auch die Realisierbarkeit der einzelnen Bauteile ist gegeben, sodass auf einfache Weise die Batterieanordnung für ein Kraftfahrzeug realisiert werden kann. Insbesondere kann zur weiteren Bauteilreduzierung eine Steuerung der Schalter, insbesondere der Hochvolt-Schütze, in die Batterieanordnung mit integriert werden.

In einer vorteilhaften Ausgestaltungsform kann bei einer Schließung des fünften, des sechsten und des siebten Schalters ein erster Betriebszustand geschaltet werden. Der erste elektrische und der der zumindest zweite elektrische Energiespeicher sind mit somit mit einer Ladespannung $U_L$ aufladbar, die insbesondere doppelt so hoch sein kann, wie eine Betriebsspannung des ersten und/oder des zweiten elektrischen Energiespeichers. Bei einer Schließung des fünften, des sechsten und des siebten Schalters sind der erste Energiespeicher und der zumindest zweite Energiespeicher in Serie geschaltet. Bei der Serienschaltung können somit der erste und der zweite Energiespeicher mit einer doppelten Spannung geladen werden. Somit kann:

$$U_L = 2 \times U_0$$

, wobei $U_0$ der Spannung des ersten und des zumindest zweiten Energiespeichers entspricht. Mittels der höheren elektrischen Spannung beim Laden kann die Ladeleistung erhöht werden, ohne dass der Ladestrom erhöht werden muss. Weiterhin kann darauf verzichtet werden, dass dickere und teurere Leitungen innerhalb der Batterieanordnung verlegt werden müssen, oder die einzelnen Komponenten der Batterieanordnung auf höhere elektrische Ströme ausgelegt werden müssen. Diese elektrischen Komponenten können beispielsweise eine der Kontaktierungen, die eine elektrische Trenneinrichtung, Zellverbinder, eine Elektronik oder ein Batteriemanagementsystem sein. Des Weiteren kann im Kraftfahrzeug selbst eine niedrigere Spannungsinfrastruktur bereitgestellt werden, was zu Kosteneinsparungen führen kann. Durch die Ladung mit insbesondere der doppelten Spannung des ersten und des zumindest zweiten Energiespeichers kann eine kürzere Ladezeit ermöglicht werden, und gleichzeitig kann eine günstigere Spannungsinfrastruktur im Kraftfahrzeug selbst, insbesondere für die elektrischen Verbraucher, bereitgestellt werden.

Gemäß einer vorteilhaften Ausgestaltungsform kann bei einer Schließung des ersten, des zweiten, des dritten und des vierten Schalters ein zweiter Betriebszustand geschaltet werden. Bei dieser Ausgestaltungsform befindet sich das Kraftfahrzeug insbesondere in einem Fahrzustand, bei welchem mittels des ersten und des zumindest zweiten Energiespeichers die Spannung insbesondere für den Fahrbetrieb zur Verfügung gestellt werden kann. Es können elektrische Komponenten, insbesondere elektrische Verbraucher, welche beispielsweise eine elektrische Antriebseinheit des Kraftfahrzeugs sein kann, betrieben werden. Die Betriebsspannung $U_B$ kann insbesondere die Spannung beispielsweise eines elektrischen Motors sein, die bewirkt wird, um den elektrischen Motor anzutreiben. Bei dieser Ausgestaltungsform befindet sich der erste und der zumindest zweite Energiespeicher in einem parallel geschalteten Zustand. Somit entspricht $U_B = U_0$. Mittels der Parallelschaltung kann somit bei gleicher Spannung eine höhere Energiedichte, insbesondere ein höherer Strom für die elektrischen Komponenten des Kraftfahrzeugs zur Verfügung gestellt werden.

Gemäß einer weiteren vorteilhaften Ausgestaltungsform können bei einer Schließung des ersten, des zweiten, des dritten, des vierten, des sechsten und des siebten Schalters ein dritter Betriebszustand geschaltet werden. Der erste und der zumindest zweite elektrische Energiespeicher sind bspw. mit einer einfachen Ladespannung $U_L$ aufladbar. Somit sind:

$$U_B = U_L = U_0$$

Bei dieser Konfiguration befinden sich der erste elektrische und zumindest der zweite elektrische Energiespeicher parallel sowie der Ladeanschluss und der Versorgungsanschluss parallel. Somit kann der erste Energiespeicher und der zumindest zweite Energiespeicher über den Ladeanschluss mit einer gleichen Ladespannung geladen werden, währenddessen gleichzeitig beispielsweise am Versorgungsanschluss ebenfalls die gleiche Spannung zur Verfügung gestellt werden kann. Somit kann beispielsweise bei einer 400-Volt-Infrastruktur des Kraftfahrzeugs und beispielsweise bei einer 400-Volt-Infrastruktur des Ladeanschlusses der erste und der zumindest zweite Energiespeicher entsprechend geladen werden.

Gemäß einer weiteren vorteilhaften Ausgestaltungsform kann bei Öffnung des ersten, des zweiten, des dritten, des vierten, des sechsten, des siebten und/oder des fünften Schalters ein vierter Betriebszustand geschaltet werden. Dieser vierte Betriebszustand realisiert eine allpolige Potentialtrennung. Mittels dieser Ausführungsform sind alle Komponenten der Batterieanordnung voneinander trennbar und somit kann die Hochvolt-Sicherheit gewährleistet werden. Es kann somit allpolige Spannungsfreiheit hergestellt werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert.

Dabei zeigen:

Fig. 1 eine Batterieanordnung für ein Kraftfahrzeug gemäß einem erfindungsgemäßen Ausführungsbeispiel;

Fig. 2 die Batterieanordnung gemäß Fig. 1 in einem weiteren Betriebszustand gemäß einem erfindungsgemäßen Ausführungsbeispiel; und

Fig. 3 eine Batterieanordnung mit einer Mehrzahl von elektrischen Energiespeichern gemäß einem erfindungsgemäßen Ausführungsbeispiel.

In den Fig. werden gleiche und funktionsgleiche Elemente mit den gleichen Bezugszeichen versehen.

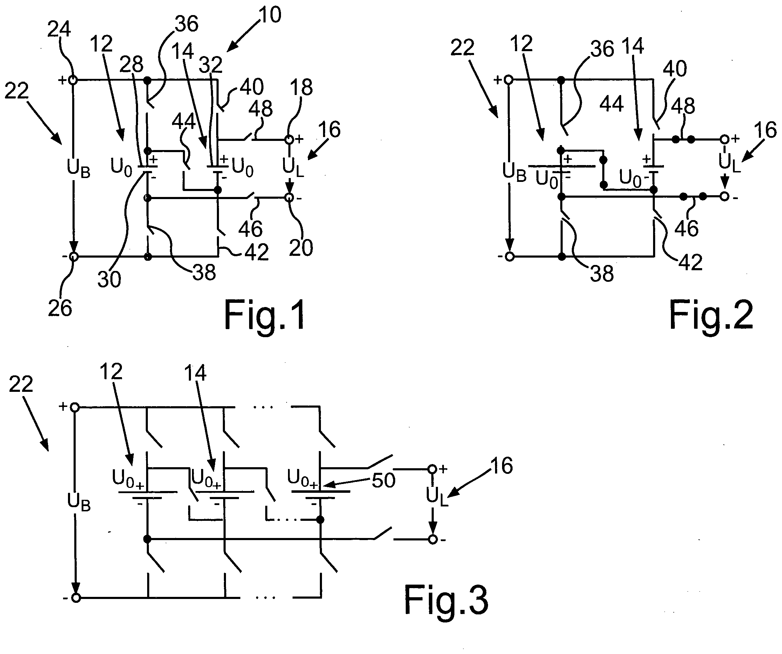

Fig. 1 zeigt eine Batterieanordnung 10 für ein Kraftfahrzeug, welches in Fig. 1 nicht dargestellt ist, in einer schematischen Darstellung. Die Batterieanordnung 10 kann beispielsweise in einem Elektrofahrzeug, einem Plug-in-Hybrid oder einem Hybridfahrzeug verwendet werden. Das Kraftfahrzeug kann dabei insbesondere als Personenkraftfahrzeug, als Bus oder als Lastkraftwagen ausgebildet sein.

Die Batterieanordnung 10 umfasst weiterhin einen ersten Energiespeicher 12 und zumindest einen zweiten Energiespeicher 14. Der erste Energiespeicher 12 und der zweite Energiespeicher 14 können zusammen insbesondere eine Hochvolt-Batterie bilden. Ferner umfasst die Batterieanordnung 10 einen Ladeanschluss 16 mit einem positiven Pol 18 des Ladeanschlusses 16 und einem negativen Pol 20 des Ladeanschlusses 16. Ferner umfasst die Batterieanordnung 10 einen Versorgungsanschluss 22 mit einem positiven Pol 24 des Versorgungsanschlusses 22 und einem negativen Pol 26 des Versorgungsanschlusses. Der erste Energiespeicher 12 weist weiterhin einen positiven Pol 28 des ersten Energiespeichers 12 auf sowie einen negativen Pol 30 des ersten Energiespeichers. Der zweite Energiespeicher 14 weist ebenfalls einen positiven Pol 32 des zweiten Energiespeichers 14 sowie einen negativen Pol 34 des zweiten Energiespeichers 14 auf.

Am Ladeanschluss 16 kann insbesondere eine Ladespannung $U_L$ eingespeist werden. Der erste Energiespeicher 12 und der zweite Energiespeicher 14 sind mit einer Spannung $U_0$ betreibbar. Des Weiteren kann insbesondere am Versorgungsanschluss 22 die Spannung $U_B$ anliegen.

Des Weiteren weist die Batterieanordnung 10 einen ersten Schalter 36 auf, welcher den positiven Pol 28 des ersten Energiespeichers 12 mit dem positiven Pol 24 des Versorgungsanschlusses 22 verbindet. Ein zweiter Schalter 38 verbindet den negativen Pol 30 des ersten Energiespeichers 12 mit dem negativen Pol 26 des Versorgungsanschlusses 22. Ein dritter Schalter 40 verbindet den positiven Pol 32 des zweiten Energiespeichers 14 mit dem positiven Pol 24 des Versorgungsanschlusses 22. Ein vierter Schalter 42 verbindet den negativen Pol 34 des zweiten Energiespeichers 14 mit dem negativen Pol 26 des Versorgungsanschlusses 22. Ein fünfter Schalter 44 verbindet den positiven Pol 28 des ersten Energiespeichers 12 mit dem negativen Pol 34 des zweiten Energiespeichers 14. Ein sechster Schalter 46 verbindet den negativen Pol 30 des ersten Energiespeichers 12 mit dem negativen Pol 20 des Ladeanschlusses 16. Und ein siebter Schalter 48 verbindet den positiven Pol 32 des zweiten Energiespeichers 14 mit dem positiven Pol 18 des Ladeanschlusses 16.

Bei den Schaltern 36, 38, 40, 42, 44, 46, 48 kann es sich insbesondere um Hochvolt-Schütze handeln.

Über den Ladeanschluss 16 kann insbesondere der erste elektrische Energiespeicher 12 und der zweite elektrische Energiespeicher 14 mittels einer kraftfahrzeugexternen Ladestation aufgeladen werden. Am Versorgungsanschluss 22 kann insbesondere ein elektrischer Verbraucher des Kraftfahrzeuges angeschlossen sein, insbesondere kann es sich bei dem elektrischen Verbraucher um einen elektrischen Antriebsmotor des Kraftfahrzeugs handeln. Über den Versorgungsanschluss 22 kann somit der elektrische Verbraucher von dem ersten elektrischen Energiespeicher 12 und/oder dem zweiten elektrischen Energiespeicher 14 mit elektrischer Energie versorgt werden. Fig. 1 zeigt die Schalter 36, 38, 40, 42, 44, 46, 48 in einem geöffneten Zustand. Es kann somit insbesondere eine allpolige Spannungsfreiheit hergestellt werden, die insbesondere der Sicherheit im Hochvoltnetz dient, insbesondere den Vorgaben bestimmter Hochvolt-Normen. Diese Schaltung kann insbesondere einen vierten Betriebszustand der Batterieanordnung 10 entsprechen.

Der erste Schalter 36, der zweite Schalter 38, der dritte Schalter 40 und der vierte Schalter 42 können insbesondere eine Potentialtrennung in Richtung einer Versorgungsspannung $U_B$ sicherstellen. Der sechste Schalter 46 und der siebte Schalter 48 können insbesondere die Potentialtrennung in Richtung der Ladespannung $U_L$ sicherstellen. Der sechste Schalter 46 und der siebte Schalter 48 können insbesondere als Ladeschütze fungieren. Der fünfte Schalter 44 ermöglicht eine Serienschaltung des ersten Energiespeichers 12 und des zweiten Energiespeichers 14. Da der fünfte Schalter 44 für keine Potentialtrennung zuständig ist, kann der fünfte Schalter 44 auch beispielsweise als Halbleiter-Bauteil (Diode, Transistor, etc.) ausgebildet sein.

Fig. 2 zeigt die Batterieanordnung 10 gemäß einem erfindungsgemäßen Ausführungsbeispiel insbesondere in einem ersten Betriebszustand der Batterieanordnung. In Fig. 2 ist der sechste Schalter 46 und der siebte Schalter 48 geschlossen. Des Weiteren ist der fünfte Schalter 44 geschlossen. Der erste Schalter 36, der zweite Schalter 38, der dritte Schalter 40, und der vierte Schalter 42 befinden sich weiter in einem geöffneten Zustand. Somit sind der erste Energiespeicher 12 und der zweite Energiespeicher 14 in Serie geschaltet. An dem Ladeanschluss 16 kann zum Laden des ersten elektrischen Energiespeichers 12 und des zweiten elektrischen Energiespeichers 14 die Ladespannung $U_L$ angelegt werden. Diese Ladespannung $U_L$ kann insbesondere doppelt so groß sein, als die Spannung $U_0$ des ersten elektrischen Energiespeichers 12 und des zweiten elektrischen Energiespeichers 14. Beispielsweise kann die Ladespannung $U_L$ 800 Volt betragen. Die Spannung des ersten elektrischen Energiespeichers 12 und/oder des zweiten elektrischen Energiespeichers 14 kann dabei insbesondere 400 Volt betragen. Somit kann zum Laden der elektrischen Energiespeicher 12, 14 die Ladespannung $U_L$ verwendet werden, die größer als die Spannung $U_0$ beziehungsweise ebenfalls größer als die Versorgungsspannung $U_B$ sein. Durch die höhere Ladespannung $U_L$ kann beim Laden der elektrischen Energiespeicher 12, 14 eine höhere Ladeleistung erreicht werden. Zudem können kürzere Ladezeiten ermöglicht werden. Des Weiteren kann weiterhin beispielsweise eine 400-Volt-Infrastruktur für die Batterieanordnung verwendet werden.

Fig. 3 zeigt die Batterieanordnung 10 in einer weiteren Ausführungsform. Hierbei umfasst die Batterieanordnung 10 eine Mehrzahl von elektrischen Energiespeichern 12, 14, 50. Vorliegend sind der Übersichtlichkeit halber nur der erste elektrische Energiespeicher 12, der zweite elektrische Energiespeicher 14 und ein letzter elektrischer Energiespeicher 50 dargestellt. Mittels dieser Ausführungsform ist es möglich, eine Vielzahl an elektrischen Energiespeichern 12, 14, 50 bereitzustellen, und somit eine höhere Energiedichte, insbesondere für das Betreiben der Verbraucher im Kraftfahrzeug zu gewährleisten.

Bezugszeichenliste

10    Batterieanordnung
12    erster Energiespeicher
14    zweiter Energiespeicher
16    Ladeanschluss
18    positiver Pol
20    negativer Pol
22    Versorgungsanschluss
24    positiver Pol
26    negativer Pol
28    positiver Pol
30    negativer Pol
32    positiver Pol
34    negativer Pol
36    erster Schalter
38    zweiter Schalter
40    dritter Schalter
42    vierter Schalter
44    fünfter Schalter
46    sechster Schalter
48    siebter Schalter
50    letzter Energiespeicher

**Patentansprüche**

1.    Batterieanordnung (10) für ein Kraftfahrzeug, mit:

- einem ersten elektrischen Energiespeicher (12) und zumindest einem zweiten elektrischen Energiespeicher (14);
- einem Ladeanschluss (16) und einem Versorgungsanschluss (22);
- einem ersten Schalter (36), mittels welchem ein positiver Pol (28) des ersten elektrischen Energiespeichers (12) mit einem positiven Pol (24) des Versorgungsanschlusses (22) verbindbar ist,
wobei der erste Schalter (36) direkt zwischen dem positiven Pol (28) des ersten elektrischen Energiespeichers (12) und dem positiven Pol (24) des Versorgungsanschlusses (22) angeordnet ist;

- einem zweiten Schalter (38), mittels welchem ein negativer Pol (30) des ersten elektrischen Energiespeichers (12) mit dem negativen Pol (26) des Versorgungsanschlusses (22) verbindbar ist,

wobei der zweite Schalter (38) direkt zwischen dem negativen Pol (30) des ersten elektrischen Energiespeichers (12) und dem negativen Pol (26) des Versorgungsanschlusses (22) angeordnet ist;

- einem dritten Schalter (40), mittels welchem ein positiver Pol (32) des zweiten elektrischen Energiespeichers (14) mit dem positiven Pol (24) des Versorgungsanschlusses (22) verbindbar ist,

wobei der dritte Schalter (40) direkt zwischen dem positiven Pol (32) des zweiten elektrischen Energiespeichers (14) und dem positiven Pol (24) des Versorgungsanschlusses (22) angeordnet ist;

- einem vierten Schalter (42), mittels welchem ein negativer Pol (34) des zweiten elektrischen Energiespeichers (14) mit einem negativen Pol (26) des Versorgungsanschlusses (22) verbindbar ist,

wobei der vierte Schalter (42) direkt zwischen dem negativen Pol (34) des zweiten elektrischen Energiespeichers (14) und dem negativen Pol (26) des Versorgungsanschlusses (22) angeordnet ist; und

- einem fünften Schalter (44), mittels welchem der positive Pol (28) des ersten elektrischen Energiespeichers (12) mit dem negativen Pol (34) des zweiten elektrischen Energiespeichers (14) verbindbar ist;
- die Batterieanordnung (10) einen sechsten Schalter (46) aufweist, mittels welchem der negative Pol (30) des ersten elektrischen Energiespeichers (12) mit einem negativen Pol (20) des Ladeanschlusses (16) verbindbar ist,

wobei der sechste Schalter (46) direkt zwischen dem negativen Pol (30) des ersten elektrischen Energiespeichers (12) und dem negativen Pol (20) des Ladeanschlusses (16) angeordnet ist; und

- die Batterieanordnung (10) einen siebten Schalter (48) aufweist, mittels welchem der positive Pol (32) des zweiten elektrischen Energiespeichers (14) mit einem positiven Pol (18) des Ladeanschlusses (16) verbindbar ist,

**dadurch gekennzeichnet, dass**
der siebte Schalter (48) direkt zwischen dem positiven Pol (32) des zweiten elektrischen Energiespeichers (14) und dem positiven Pol (18) des Ladeanschlusses (16) angeordnet ist, so dass durch den sechste Schalter (46) und den siebte Schalter (48) der Ladeanschluss (16), vollkommen unabhängig von einer Zuschaltung oder Wegschaltung des Versorgungsanschlusses (22), mit den elektrischen Energiespeichern (12, 14) verbunden sein kann.

2. Batterieanordnung (10) nach Anspruch 1, **dadurch gekennzeichnet, dass** die Batterieanordnung (10) bei einer Schließung des fünften (44), des sechsten (46) und des siebten Schalters (48) in einen ersten Betriebszustand geschaltet ist.

3. Batterieanordnung (10) nach Anspruch 1, **dadurch gekennzeichnet, dass** die Batterieanordnung (10) bei einer Schließung des ersten (36), des zweiten (38), des dritten (40) und des vierten (42) Schalters in einen zweiten Betriebszustand geschaltet ist.

4. Batterieanordnung (10) nach Anspruch 1, **dadurch gekennzeichnet, dass** die Batterieanordnung (10) bei einer Schließung des ersten (36), des zweiten (38), des dritten (40), des vierten (42), des sechsten (46) und des siebten (48) Schalters in einen dritten Betriebszustand geschaltet ist.

5. Batterieanordnung (10) nach Anspruch 1, **dadurch gekennzeichnet, dass** die Batterieanordnung (10) bei Öffnung des ersten (36), des zweiten (38), des dritten (40), des vierten (42), des sechsten (46), des siebten (48) und/oder des fünften (44) Schalters in einen vierten Betriebszustand geschaltet ist.

**Claims**

1. Battery arrangement (1) for a motor vehicle, having

- a first electric energy storage device (12) and at least one second energy storage device (14);
- a charging connection (16) and a supply connection (22);
- a first switch (36), by means of which a positive pole (28) of the first electric energy storage device (12) can be connected to a positive pole (24) of the supply connection (22), wherein the first switch (36) is directly located between the positive pole (28) of the first electric energy storage device (12) and the positive pole (24) of the supply connection (22);

- a second switch (38), by means of which a negative pole (30) of the first electric energy storage device (12) can be connected to the negative pole (26) of the supply connection (22),

wherein the second switch (38) is directly located between the negative pole (30) of the first electric energy storage device (12) and the negative pole (26) of the supply connection (22),

- a third switch (40), by means of which a positive pole (32) of the second electric energy storage device (14) can be connected to the positive pole (24) of the supply connection (22),

wherein the third switch (40) is directly located between the positive pole (32) of the second electric energy storage device (14) and the positive pole (24) of the supply connection (22);

- a fourth switch (42), by means of which a negative pole (34) of the second electric energy storage device (14) can be connected to a negative pole (26) of the supply connection (22),

wherein the fourth switch (42) is directly located between the negative pole (34) of the second electric energy storage device (14) and the negative pole (26) of the supply connection (22); and

- a fifth switch (44), by means of which the positive pole (28) of the first electric energy storage device (12) can be connected to the negative pole (34) of the second electric energy storage device (14);
- the battery arrangement (10) having a sixth switch (46), by means of which the negative pole (30) of the first electric energy storage device (12) can be connected to a negative pole (20) of the charging connection (16),

wherein the sixth switch (46) is directly located between the negative pole (30) of the first electric energy storage device (12) and the negative pole (20) of the charging connection (16); and

- the battery arrangement (10) having a seventh switch (48), by means of which the positive pole (32) of the second electric energy storage device (14) can be connected to a positive pole (18) of the charging connection (16),

**characterised in that**
the seventh switch (48) is directly located between the positive pole (32) of the second electric energy storage device (14) and the positive pole (18) of the charging connection (16), so that, by means of the sixth switch (46) and the seventh switch (48), the charging connection (16) can be connected to the electric energy storage devices (12, 14) completely independently of a connection or disconnection of the supply connection (22).

2.  Battery arrangement (10) according to claim 1, **characterised in that** the battery arrangement (10) is switched to a first operating state at a closing of the fifth (44), the sixth (46) and the seventh switch (48).

3.  Battery arrangement (10) according to claim 1, **characterised in that** the battery arrangement (10) is switched to a second operating state at a closing of the first (36), the second (38), the third (40) and the fourth (42) switch.

4.  Battery arrangement (10) according to claim 1, **characterised in that** the battery arrangement (10) is switched to a third operating state at a closing of the first (36), the second (38), the third (40), the fourth (42), the sixth (46) and the seventh (48) switch.

5.  Battery arrangement (10) according to claim 1, **characterised in that** the battery arrangement (10) is switched to a fourth operating state at an opening of the first (36), the second (38), the third (40), the fourth (42), the sixth (46), the seventh (48) and/or the fifth (44) switch.

**Revendications**

1.  Système de batterie (10) pour un véhicule à moteur, comprenant

- un premier accumulateur d'énergie électrique (12) et au moins un deuxième accumulateur d'énergie électrique (14) ;
- un port de charge (16) et une prise d'alimentation (22),
- un premier commutateur (36), avec lequel un pôle positif (28) du premier accumulateur d'énergie électrique (12) peut être relié à un pôle positif (24) du raccord d'alimentation (22) le premier commutateur (36) étant directement disposé entre le pôle positif (28) du premier accumulateur d'énergie électrique (12) et le pôle positif (24) du raccord d'alimentation (22) ;

- un deuxième commutateur (38) avec lequel un pôle négatif (30) du premier accumulateur d'énergie électrique (12) peut être relié au pôle négatif (26) du raccord d'alimentation (22),
- le deuxième commutateur (38), étant directement disposé entre le pôle négatif (30) du premier accumulateur d'énergie électrique (12) et le pôle négatif (26) du raccord d'alimentation (22),
- un troisième commutateur (40) avec lequel un pôle positif (32) du deuxième accumulateur d'énergie électrique (14) peut être relié au pôle négatif (24) du raccord d'alimentation (22),

le troisième commutateur (40) étant directement disposé entre le pôle positif (32) du deuxième accumulateur d'énergie électrique (14) et le pôle positif (24) du raccord d'alimentation (22),

- un quatrième commutateur (42) avec lequel un pôle négatif (34) du deuxième accumulateur d'énergie électrique (14) peut être relié à un pôle négatif (26) du raccord d'alimentation (22),

le quatrième commutateur (42) étant directement disposé entre le pôle négatif (34) du deuxième accumulateur d'énergie électrique (14) et le pôle négatif (26) du raccord d'alimentation (22) ; et

- un cinquième commutateur (44) au moyen duquel le pôle négatif (28) du premier accumulateur d'énergie électrique (12) peut être relié au pôle négatif (34) du deuxième accumulateur d'énergie électrique (14) ;
- le système de batterie (10) présentant un sixième commutateur (46) au moyen duquel le pôle négatif (30) du premier accumulateur d'énergie électrique (12) peut être relié à un pôle négatif (20) du raccord de charge (16)

le sixième commutateur (46) étant disposé directement entre le pôle négatif (30) du premier accumulateur d'énergie électrique (12) et le pôle négatif (20) du raccord de charge ; et

- le système de batterie (10) présente un septième commutateur (48) au moyen duquel le pôle positif (32) du deuxième accumulateur d'énergie électrique (14) peut être relié à un pôle positif (18) du raccord de charge (16),

**caractérisé en ce que**
le septième commutateur (48) est directement disposé entre le pôle positif (32) du deuxième accumulateur d'énergie électrique (14) et le pôle positif (18) du raccord de charge (16),
de sorte que par le sixième commutateur (46) et par le septième commutateur (48) le raccord de charge (16) peut être relié entièrement indépendamment d'une activation ou d'une désactivation du raccord d'alimentation (22), aux accumulateurs d'énergie électrique (12, 14).

2. Système de batterie (10) selon la revendication 1, **caractérisé en ce que**
le système de batterie (10) est commuté dans un premier état de fonctionnement, lorsque les cinquième (44), sixième (46) et septième commutateurs (48) sont fermés.

3. Système de batterie (10) selon la revendication 1, **caractérisé en ce que**
le système de batterie (10) est commuté dans un second état de fonctionnement lorsque les premier (36), deuxième (38), troisième (40) et quatrième (42) commutateurs sont fermés.

4. Système de batterie (10) selon la revendication 1, **caractérisé en ce que**
le système de batterie (10) est commuté dans un troisième état de fonctionnement lorsque les premier (36), deuxième (38), troisième (40), quatrième (42), sixième (46) et septième (48) commutateurs sont fermés.

5. Système de batterie (10) selon la revendication 1, **caractérisé en ce que**
le système de batterie (10) est commuté dans un quatrième état de fonctionnement lorsque le premier (36), deuxième (38), troisième (40), quatrième (42), sixième (46), septième (48) et/ou cinquième (44) commutateurs sont ouverts.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2897247 A

- DE 102015006208 A1